# EUROPEAN PATENT APPLICATION

(11) **EP 2 033 980 A1**
(43) Date of publication of application: **11.03.2009**
(21) Application number: 07742125.3
(22) Date of filing: 17.04.2007
(51) Int. Cl.: C08G 63/60, C08L 101/16

(54) **PDC-LACTIC ACID COPOLYESTER AND MOLDED ARTICLE THEREOF**

(30) Priority: 23.06.2006 JP 2006174069
(71) Applicant: Kabushiki Kaisha Toyota Jidoshokki, Kariya-shi, Aichi 448-8671 (JP); National University Corporation Tokyo University of Agriculture and Technology, Fuchu-shi, Tokyo 183-8538 (JP)
(72) Inventor: MASE, Kohei, Kariya-shi Aichi 448-8671 (JP); SHIMO, Toshihisa, Kariya-shi Aichi 448-8671 (JP); OHARA, Naoki, Kariya-shi Aichi 448-8671 (JP); SHIGEHARA, Kiyotake, Fuchu-shi Tokyo 183-8538 (JP); KATAYAMA, Yoshihiro c/o National University Corporation, Fuchu-shi, Tokyo 183-5838 (JP)
(74) Representative: TBK-Patent
(86) International application number: PCT/JP2007/058690
(87) International publication number: WO 2007/148471

(57) **Abstract**

A polyester containing a biomass-derived material in a repeating unit structure and having all of sufficient mechanical strength, easy mold processability into a molded product such as fiber or film, and biodegradability, is provided.

A PDC-L-lactic acid copolyester represented by the following formula:

-[R¹-PDC]ₓ-[OCH(CH₃)CO]₁₋ₓ- (I)

[wherein PDC is a dicarboxylic acid residue represented by the following formula (II):

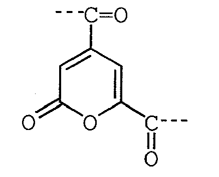

R¹ is selected from -O(CH₂)ₙO-, -O(CH₂CH₂O)ₘ- and -O[CH(CH₃)CH₂O]ₘ-, where n represents an integer of 3 to 6 and m represents an integer of 1 to 4; and is 0.005≤x≤0.2 when n≤4 or m≤2, and is 0.005≤x≤0.4 in other cases]; and a molded product containing the PDC-L-lactic acid copolyester.

## Description

### TECHNICAL FIELD

The present invention relates to a melt-moldable PDC-lactic acid copolyester using a biomass-derived material and having biodegradability and a film/fiber forming ability, and a molded product containing the copolyester.

### BACKGROUND ART

As for the biomass-derived polyester, PHA [poly(hydroxyalkanoates)] (see, for example, Japanese National Patent Publication (Kohyo) No. 2005-521718, Japanese Unexamined Patent Publication (Kokai) Nos. 2001-226566 and 2006-22325), such as poly(lactic acid) (see, for example, Japanese Unexamined Patent Publication (Kokai) No. 2004-204217), poly(3-hydroxybutanoic acid) and poly(hydroxyvaleric acid), etc., or a poly(tetramethylene succinate) (see, for example, Japanese Unexamined Patent Publication (Kokai) No. 2003-128768) and the like are known, and these all are an aliphatic polyester.

However, the poly(3-hydroxybutanoic acid) and poly(hydroxyvaleric acid) are questionable in terms of large-scale productivity. Other PHAs are insufficient in any one or more properties out of i) mechanical property, ii) easy mold processability into fiber or film, and iii) biodegradability, and therefore their use is limited. For example, PHA with the number of carbons contained in the repeating unit being small is hard and brittle. For example, if a poly(lactic acid) as a single component in a material for a molded product, the material can be hardly processed into a film, and its expansion into a clothing fiber or the like is difficult. Furthermore, the poly(lactic acid) crystallizes slowly and allows for no progress of orientated crystallization by stretching, because it has a methyl side chain that inhibits packing of a polymer chain. Therefore, a molded product having sufficiently high strength is difficult to obtain. Thus, the mechanical strength is insufficient as an industrial fiber, and biodegradability is greatly lacking as an agricultural fiber or film. On the other hand, a poly(hydroxyvaleric acid), PHA, with the number of carbons contained in the repeating unit being large, or a poly(tetramethylene succinate), are easy to process into a film because of their low glass transition temperature and are excellent also in the biodegradability. However, oriented crystallization of a polymer chain by stretching or the like scarcely proceeds, and therefore these polymers are not suitable for a fiber.

On the other hand, in recent years, it is reported that 2H-pyran-2-one-4,6-dicarboxylic acid (hereinafter referred to as "PDC") that is a final intermediate in the biodegradation of a botanical aromatic component such as lignin can be produced in an industrial scale (see, for example, Japanese Unexamined Patent Publication (Kokai) No. 2005-278549). The PDC is expected to be useful as a material for functional plastics or chemical products.

### DISCLOSURE OF THE INVENTION

Accordingly, an object to be solved by the present invention is to provide a polyester containing a biomass-derived material in a repeating unit structure and having all of sufficient mechanical strength, easy mold processability into a molded product such as fiber or film, and biodegradability, and a molded product thereof.

As a result of intensive studies to solve those problems of conventional biomass-derived polyesters, the present inventors have found that a PDC-L-lactic acid copolyester containing PDC in a repeating unit structure, represented by the specified general formula, can provide a molded product having all of the properties above. The present invention has been accomplished based on this finding.

That is,
(1) the present invention provides a PDC-L-lactic acid copolyester represented by the following formula:

   -[R¹-PDC]ₓ-[OCH(CH₃)CO]₁₋ₓ- (I)

   [wherein:
   PDC is a dicarboxylic acid residue represented by the following formula (II): 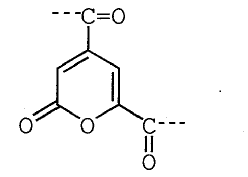
   R¹ is selected from -O(CH₂)ₙO-, -O(CH₂CH₂O)ₘ- and -O[CH(CH₃)CH₂O]ₘ-, where n represents an integer of 3 to 6, and m represents an integer of 1 to 4; and
   x is 0.005≤x≤0.2 when n≤4 or m≤2, and is 0.005≤x≤0.4 in other cases].
(2) The present invention also provides the PDC-L-lactic acid copolyester according to (1), wherein the melting point is from 100 to 220°C.
(3) The present invention also provides the PDC-L-lactic acid copolyester according to (1) or (2), wherein the number average molecular weight is from 50,000 to 100,000.
(4) The present invention also provides a molded product containing the PDC-L-lactic acid copolyester according to any one of (1) to (3).
(5) The present invention also provides the molded product according to (4), wherein the molded product is a film.

According to the present invention, a molded product having sufficient mechanical strength, easy mold processability into a molded product such as fiber or film, and biodegradability, as compared with conventional biomass-derived polyesters, can be produced.

### BEST MODE FOR CARRYING OUT THE INVENTION

The copolyester of the present invention is represented by the following formula:

-[R¹-PDC]ₓ-[OCH(CH₃)CO]₁₋ₓ- (I)

PDC is a dicarboxylic acid residue represented by the following formula (II): 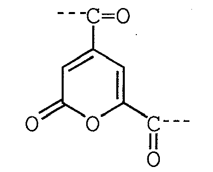 R¹ is selected from -O(CH₂)ₙO-, -O(CH₂CH₂O)ₘ- and -O[CH(CH₃)CH₂O]ₘ-, where n represents an integer of 3 to 6, and m represents an integer of 1 to 4. x is 0.005≤x≤0.2 when n=3 or 4 or m=1 or 2, and is 0.005≤x≤0.4 when n=5 or 6 or m=3 or 4.

In the copolyester of the present invention, in light of maintaining the mold processability by the melting of the copolyester, the content of the repeating unit -[R¹-PDC]- needs to be limited to within the range of said "x". The content of the repeating unit is preferably as close as possible to the lower limit of x. If the content exceeds the range, the melting point of the copolyester becomes higher than 220°C that is the decomposition temperature of the 2H-pyranone ring of PDC, and therefore melt processing cannot be performed. The polyester of the present invention where the content of the repeating unit is within the range of x can be melt processed, and the melting point thereof is 220°C or less, preferably in a temperature range of about 100 to about 160°C.

On the other hand, if the content of the repeating unit -[R¹-PDC]- is less than the range of x, the PDC content is too small and therefore the mechanical strength of the copolyester becomes insufficient. This is due to the introduction of a rigid structure into the main chain by pseudo-aromaticity of the 2H-pyranone ring, and the increase in the polar interaction between polymers due to strong bipolar moment of the 2H-pyranone ring. As described in Examples later, the copolyester of the present invention when formed into a molded product such as film or sheet maintains the elastic deformation state on the order of about 65 to 91 MPa by virtue of the polar interaction in an amorphous condition.
Furthermore, in the copolyester of the present invention, biodegradability increases as x is larger, because the copolyester of the present invention is not merely depolymerized by hydrolysis of only the ester bond moiety but is depolymerized also in the 2H-pyranone ring moiety. Accordingly, in terms of increasing the mechanical strength and imparting biodegradability, the content of the repeating unit is preferably as close as possible to the upper limit of x and is preferably 0.1 or more.

The copolyester of the present invention is obtained by adding B mol of L-lactic acid to an equimolar mixture composed of A mol of a diol selected from HO(CH₂)ₙOH, HO(CH₂CH₂O)ₘH and HO[CH(CH₃)CH₂O]ₘH (where n is an integer of 3 to 6, and m is an integer of 1 to 4) and A mol of PDC, and heating the mixture with stirring in the presence of an appropriate polymerization catalyst, thereby effecting solution polymerization. A method for producing PDC is not particularly limited, but this PDC can be obtained by the method described, for example, in Japanese Unexamined Patent Publication (Kokai) No. 2005-278549, Japanese Unexamined Patent Publication (Kokai) No. 2000-32988, etc.

The number average molecular weight of the copolyester of the present invention is preferably from 50,000 to 100,000, because if the number average molecular weight is too high, solubility in a solvent is reduced, while if it is excessively low, the film formability is worsened.

The polymerization catalyst includes an oxide of antimony, germanium, titanium, cobalt, tin, uranium, calcium, silver, zirconium or the like; and a sulfonic acid compound such as methylsulfonic acid, laurylsulfuric ester and hexadecylsulfuric acid ester. A mixture of two or more polymerization catalysts may be used. In terms of polymerization rate and physical properties of the polyester obtained, the amount of the polymerization initiator used is preferably from 1×10⁻⁴ to 5×10⁻⁴ mol per mol of the acid component constituting the polyester.

The polymerization reaction is preferably performed in a solventless system for obtaining a copolyester having a high polymerization degree of 50,000 to 100,000.

The reaction conditions of polymerization are not particularly limited, but in general, the reaction temperature is preferably from 165 to 180°C. The reaction time is preferably on the order of 3 to 48 hours, more preferably on the order of 3 to 18 hours, after reaching the polymerization temperature. The polymerization reaction may be performed under air, but in terms of molecular weight and yield, is preferably performed in an inert gas atmosphere such as argon, helium and nitrogen.

The copolyester obtained by the reaction above can be separated from impurities such as unreacted monomer, oligomer and reaction residue thereof by dissolving the polymerization reaction solution, for example, in chloroform, removing by filtration insoluble components such as unreacted polymerization solvent, adding dropwise the solution to a poor solvent to precipitate the polymer, and then drying it under reduced pressure. The poor solvent is not particularly limited as long as it is a solvent in which the copolyester is not dissolved. Specific examples of the poor solvent include water; alcohols such as methanol and isopropanol; and saturated hydrocarbons such as hexane and heptane.

The polyester of the present invention is excellent in the moldability, and therefore can be applied to various molded products containing the polyester, such as sheet, film, fiber, blow molded article, injection molded article and extrusion molded article.

### EXAMPLES

The present invention is described in greater detail below by referring to Examples, but the present invention is not limited to these Examples by any means.

### Preparation Example 1

Into a large test tube having a diameter of 5 cm and a length of 15 cm, 184 mg (1.00 mmol) of PDC, 62.1 mg (1.00 mmol) of ethylene glycol, 17.93 g (199 mmol) of L-lactic acid and 100 mg of Sb₂O₃ were charged in a nitrogen atmosphere, and the test tube was plugged with a rubber stopper into which an injection needle for removing the pressure was stuck. The temperature was raised to 180°C at a rate of 2°C/min with stirring, the reaction was allowed to proceed at the same temperature for 3 hours, the pressure was then gradually reduced with care not to cause bumping, and the reaction was performed finally at 0.5 torr or less for 18 hours. The reaction solution was cooled and then dissolved in about 80 ml of chloroform, a slight amount of insoluble components considered to be derived from the catalyst were removed by filtration, and the solution was poured in 2,000 ml of methanol with stirring. The obtained white precipitate was collected by filtration, washed with 100 ml of methanol and dried under reduced pressure at ordinary temperature. Yield: 14.3 g. Measurement of molecular weight by GPC (PSt standard): number average molecular weight = 68,400 and molecular weight dispersion = 2.75. ¹³C NMR spectrum (CDCl₃, 400 MHz) δ ppm: for PDC ring carbon, 109, 124, 142, 149, 163; for PDC carbonyl carbon, 158, 160; for -CH₂CH₂-, 64, 68; and for lactic acid unit, 17 (methyl), 69 (methine), 171 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.0053. Melting point: 138°C.

### Preparation Example 2

Reaction was performed in the same manner as in Preparation Example 1 except for using 50 mg of CH₃SO₃H in place of 100 mg of Sb₂O₃. Yield: 14.9 g. Measurement of molecular weight by GPC (PSt standard): number average molecular weight = 107,000 and molecular weight dispersion = 2.65. ¹³C NMR spectrum (CDCl₃, 400 MHz) δ ppm: the same as the data in Preparation Example 1. Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.0051. Melting point: 142°C.

### Preparation Example 3

After charging 1.84 g (10.0 mmol) of PDC, 621 mg (10.0 mmol) of ethylene glycol, 8.12 g (90 mmol) of L-lactic acid and 50 mg of Sb₂O₃ in a nitrogen atmosphere, the mixture was processed in the same manner as in Preparation Example 1. Yield: 9.73 g. Measurement of molecular weight by GPC (PSt standard): number average molecular weight = 76,300 and molecular weight dispersion = 2.81. ¹³C NMR spectrum (CDCl₃, 400 MHz) δ ppm: for PDC ring carbon, 110, 124, 142, 149, 164; for PDC carbonyl carbon, 158, 160; for -CH₂CH₂-, 65, 68; and for lactic acid unit, 17 (methyl), 69 (methine), 171 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.107. Melting point: 152°C.

### Preparation Example 4

After charging 3.68 g (20.0 mmol) of PDC, 1.24 g (20.0 mmol) of ethylene glycol, 7.21 g (80 mmol) of L-lactic acid and 30 mg of CH₃SO₃H in a nitrogen atmosphere, the mixture was processed in the same manner as in Preparation Example 1. Yield: 11.23 g. Measurement of molecular weight by GPC (PSt standard): number average molecular weight = 94,600 and molecular weight dispersion = 2.84. ¹³C NMR spectrum (CDCl₃, 400 MHz) δ ppm: for PDC ring carbon, 109, 124, 143, 149, 163; for PDC carbonyl carbon, 158, 160; for -CH₂CH₂-, 65, 69; and for lactic acid unit, 17 (methyl), 69 (methine), 172 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.196. Melting point: 163°C.

### Preparation Example 5

After charging 3.68 g (20.0 mmol) of PDC, 1.80 g (20.0 mmol) of tetramethylene glycol, 7.21 g (80 mmol) of L-lactic acid and 30 mg of CH₃SO₃H in a nitrogen atmosphere, the mixture was processed in the same manner as in Preparation Example 1 except for setting the reaction time under reduced pressure to be 24 hours. Yield: 11.66 g. Measurement of molecular weight by GPC (PSt standard): number average molecular weight = 92,200 and molecular weight dispersion = 2.73. ¹³C NMR spectrum (CDCl₃, 400 MHz) δ ppm: for PDC ring carbon, 110, 124, 143, 149, 163; for PDC carbonyl carbon, 158, 160; for -(CH₂)₄-, 65 to 69; and for lactic acid unit, 17 (methyl), 68 (methine), 170 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.192. Melting point: 131°C.

### Preparation Example 6

After charging 3.68 g (20.0 mmol) of PDC, 2.36 g (20.0 mmol) of hexamethylene glycol, 7.21 g (80 mmol) of L-lactic acid and 30 mg of CH₃SO₃H in a nitrogen atmosphere, the mixture was processed in the same manner as in Preparation Example 1 except for setting the reaction time under reduced pressure to be 36 hours. Yield: 12.19 g. Measurement of molecular weight by GPC (PSt standard): number average molecular weight = 84,500 and molecular weight dispersion = 2.77. ¹³C NMR spectrum (CDCl₃, 400 MHz) δ ppm: for PDC ring carbon, 109, 124, 142, 149, 162; for PDC carbonyl carbon, 158, 160; for -(CH₂)₆-, 64 to 69; and for lactic acid unit, 17 (methyl), 68 (methine), 170 (carbonyl). Copolymerization composition determined using, as a standard, the maximum absorption (λmas=320 nm, εmax=4.9×10⁻³ L/mol·cm) of the ultraviolet-visible absorption spectrum of PDC dimethyl ester: x=0.195. Melting point: 116°C.

### Preparation Example 7

After charging 3.68 g (20.0 mmol) of PDC, 2.12 g (20.0 mmol) of diethylene glycol, 7.21 g (80 mmol) of L-lactic acid and 50 mg of CH₃SO₃H in a nitrogen atmosphere, the mixture was processed in the same manner as in Preparation Example 1 except for setting the reaction time under reduced pressure to be 36 hours. The reaction solution was cooled and then dissolved in about 100 ml of tetrahydrofuran, a slight amount of insoluble components were removed by filtration, and the solution was poured in 2,000 ml of methanol/water (mixing ratio: 2/1) with stirring. The obtained white precipitate was collected by filtration, washed with 100 ml of a methanol/water mixed solvent and dried under reduced pressure at ordinary temperature. Yield: 11.41 g. Measurement of molecular weight by GPC (PSt standard): number average molecular weight = 82,200 and molecular weight dispersion = 2.91. ¹³C NMR spectrum (CDCl₃, 400 MHz) δ ppm: for PDC ring carbon, 109, 124, 141, 148, 160; for PDC carbonyl carbon, 157, 160; for -(CH₂)₂O(CH₂)₂-, 64, 65, 69, 70; and for lactic acid unit, 17 (methyl), 68 (methine), 171 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.196. Melting point: 114°C.

### Preparation Example 8

After charging 5.52 g (30.0 mmol) of PDC, 4.51 g (30.0 mmol) of triethylene glycol, 6.31 g (70 mmol) of L-lactic acid and 60 mg of CH₃SO₃H in a nitrogen atmosphere, the mixture was processed in the same manner as in Preparation Example 1 except for setting the reaction time under reduced pressure to be 36 hours. The reaction solution was cooled and then dissolved in about 80 ml of tetrahydrofuran, a slight amount of insoluble components were removed by filtration, and the solution was poured in 2,000 ml of methanol/water (mixing ratio: 2/1) with stirring. The obtained pale yellow precipitate was collected by filtration, washed with 100 ml of a methanol/water mixed solvent and dried under reduced pressure at ordinary temperature. Yield: 15.52 g. Measurement of molecular weight by GPC (PSt standard): number average molecular weight = 80,700 and molecular weight dispersion = 2.81. ¹³C NMR spectrum (CDCl₃, 400 MHz) δ ppm: for PDC ring carbon, 109, 124, 141, 148, 160; for PDC carbonyl carbon, 157, 160; for -(CH₂)₂O(CH₂)₂O(CH₂)₂-, 64 to 70; and for lactic acid unit, 17 (methyl), 68 (methine), 171 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.304. Melting point: 108°C.

### Preparation Example 9

After charging 7.36 g (40.0 mmol) of PDC, 7.77 g (40.0 mmol) of triethylene glycol, 5.40 g (60 mmol) of L-lactic acid and 70 mg of CH₃SO₃H in a nitrogen atmosphere, the mixture was processed in the same manner as in Preparation Example 1 except for setting the reaction time under reduced pressure to be 36 hours. The reaction solution was cooled and then dissolved in about 60 ml of tetrahydrofuran, a slight amount of insoluble components were removed by filtration, and the solution was poured in 2,000 ml of isopropyl alcohol/water (mixing ratio: 3/2) with stirring. The obtained pale yellow precipitate was collected by filtration, washed with 100 ml of an isopropyl alcohol/water mixed solvent and dried under reduced pressure at ordinary temperature. Yield: 18.66 g. Measurement of molecular weight by GPC (PSt standard): number average molecular weight = 74,400 and molecular weight dispersion = 2.71. ¹³C NMR spectrum (CDCl₃, 400 MHz) δ ppm: for PDC ring carbon, 110, 124, 141, 149, 162; for PDC carbonyl carbon, 157, 161; for -(CH₂)₂O(CH₂)₂O(CH₂)₂O(CH₂)₂-, 64 to 70; and for lactic acid unit, 17 (methyl), 68 (methine), 171 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.395. Melting point: 102°C.

### Preparation Example 10

After charging 3.68 g (20.0 mmol) of PDC, 1.52 g (20.0 mmol) of propylene glycol, 7.21 g (80 mmol) of L-lactic acid and 30 mg of CH₃SO₃H in a nitrogen atmosphere, the mixture was processed in the same manner as in Preparation Example 1. Yield: 11.47 g. Measurement of molecular weight by GPC (PSt standard): number average molecular weight = 91,200 and molecular weight dispersion = 2.88. ¹³C NMR spectrum (CDCl₃, 400 MHz) δ ppm: for PDC ring carbon, 109, 124, 142, 149, 162; for PDC carbonyl carbon, 158, 160; for propylene glycol unit, 16 (methyl), 63, 64 (methylene), 68 (methine); and for lactic acid unit, 17 (methyl), 69 (methine), 172 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.198. Melting point: 145°C.

### Preparation Example 11

After charging 7.36 g (40.0 mmol) of PDC, 10.01 g (40.0 mmol) of tetrapropylene glycol, 5.40 g (60 mmol) of L-lactic acid and 80 mg of CH₃SO₃H in a nitrogen atmosphere, the mixture was processed in the same manner as in Preparation Example 1 except for setting the reaction time under reduced pressure to be 36 hours. The reaction solution was cooled and then dissolved in about 80 ml of tetrahydrofuran, a slight amount of insoluble components were removed by filtration, and the solution was poured in 2,000 ml of isopropyl alcohol/water (mixing ratio: 3/2) with stirring. The obtained pale yellow precipitate was collected by filtration, washed with 100 ml of an isopropyl alcohol/water mixed solvent and dried under reduced pressure at ordinary temperature. Yield: 20.59 g. Measurement of molecular weight by GPC (PSt standard): number average molecular weight = 65,500 and molecular weight dispersion = 2.78. ¹³C NMR spectrum (CDCl₃, 400 MHz) δ ppm: for PDC ring carbon, 110, 124, 141, 149, 161; for PDC carbonyl carbon, 158, 160; for propylene glycol unit, 16 (methyl), 62, 63 (methylene), 68 (methine); and for lactic acid unit, 17 (methyl), 69 (methine), 172 (carbonyl). Copolymerization composition determined using, as a standard, the maximum absorption (λmax=320 nm, εmax=4.9×10⁻³ L/mol·cm) of the ultraviolet-visible absorption spectrum of PDC dimethyl ester: x=0.394. Melting point: 111°C.

### Example 1

The polyester of Preparation Example 1 was formed into a 100 µm-thick film, and the film was measured for the tensile strength. The tensile strength at breakage was 68.4 MPa and the elongation before breakage was 3.9%. Also, the time for 50% weight decrease as measured in accordance with ISO 14855 by a biodegradation test in an active compost at 56°C was from 15 to 17 days. The results are shown in Table 1.

### Examples 2 to 11

Regarding the polyesters of Preparation Examples 2 to 11, a tensile test and a biodegradation test were performed in the same manner as in Example 1. The results are shown in Table 1.

### Comparative Example 1

A poly(L-lactic acid) with a number average molecular weight of 182,000 and a molecular weight dispersion of 2.65 was formed into a 100 µm-thick film by a film-forming machine, and the film was measured for the tensile strength. The tensile strength at breakage was 61.3 MPa and the elongation before breakage was 5.2%. Also, the time for 50% weight decrease as measured in accordance with ISO 14855 by a biodegradation test in an active compost at 56°C was from 18 to 20 days. The results are shown in Table 1.

**Table 1**

| Example | Tensile Strength at Breakage (MPa) | Elongation before Breakage (%) | Time for 50% Weight Decrease (days) |
|---|---|---|---|
| Example 1 | 68.4 | 3.9 | 15 to 17 |
| Example 2 | 69.2 | 3.9 | 14 to 15 |
| Example 3 | 75.4 | 1.5 | 13 to 14 |
| Example 4 | 90.6 | 0.8 | 11 to 13 |
| Example 5 | 80.1 | 2.2 | 13 to 14 |
| Example 6 | 70.7 | 4.1 | 14 to 15 |
| Example 7 | 67.6 | 5.1 | 11 to 13 |
| Example 8 | 66.4 | 6.4 | 11 to 13 |
| Example 9 | 65.3 | 6.8 | 11 to 13 |
| Example 10 | 74.5 | 1.9 | 13 to 14 |
| Example 11 | 68.8 | 2.4 | 13 to 14 |
| Comparative Example 1 | 61.3 | 5.2 | 18 to 20 |

As it is apparent from Table 1, the films of Examples 1 to 11 of the present invention were significantly improved in terms of the tensile strength at breakage and the biodegradability as compared with the film comprising a poly(L-lactic acid).

### Reference Example 1

A copolyester represented by the following formula:

-[O(CH₂)ₙO-PDC]ₓ-[O(CH₂)ₙO-CO-C₆H₄-CO]₁₋ₓ-

(wherein PDC is a dicarboxylic acid residue defined in formula (I)) was produced in the same manner as in Preparation Example 1, except for replacing the L-lactic acid with ethylene terephthalic acid and using the formulation shown in Table 2, and was formed into a 100 µm-thick film. The film was measured for the tensile strength and hydrolysis property in each solution at 60°C. The results are shown in Table 2.

**Table 2**

| n | x | Breaking Strength (MPa) | 50% Hydrolysis Property (60°C) | | |
|---|---|---|---|---|---|
| | | | 0.01 mol/ L-NaOH | 0.05 mol/ L-H₂SO₄ | Distilled Water |
| 2 | 1.0 | not measured | 5 days (100% in 10 days) | 7 days (85% in 13 days) | about 11 days (75% in 14 days) |
| 2 | 0.4 | 68.1 | - (7% in 21 days) | not measured | - (1% in 15 days) |
| 2 | 0.3 | 65.9 | - (3% in 21 days) | not measured | not measured |
| 2 | 0.2 | 58.0 | not measured | not measured | not measured |
| 2 | 0.15 | 58.0 | not measured | not measured | not measured |
| 2 | 0.0 | 46.4 | not measured | not measured | not measured |

| | | | | | |
|---|---|---|---|---|---|
| *Note: "-" indicates that the film did not exhibit 50% hydrolysis. | | | | | |

### INDUSTRIAL APPLICABILITY

According to the present invention, a molded product having sufficient mechanical strength, easy mold processability into a molded product such as fiber or film, and biodegradability, can be produced.

## Claims

1. A PDC-L-lactic acid copolyester represented by the following formula:
-[R¹-PDC]ₓ-[OCH(CH₃)CO]₁₋ₓ- (I)
[wherein:
PDC is a dicarboxylic acid residue represented by the following formula (II): 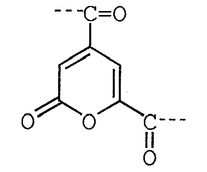
R¹ is selected from -O(CH₂)ₙO-, -O(CH₂CH₂O)ₘ- and -O[CH(CH₃)CH₂O]ₘ-, where n represents an integer of 3 to 6, and m represents an integer of 1 to 4; and
x is 0.005≤x≤0.2 when n≤4 or m≤2, and is 0.005≤x≤0.4 in other cases].

2. The PDC-L-lactic acid copolyester according to claim 1, wherein the melting point is from 100 to 220°C.

3. The PDC-L-lactic acid copolyester according to claim 1 or 2, wherein the number average molecular weight is from 50,000 to 100,000.

4. A molded product containing the PDC-L-lactic acid copolyester according to any one of claims 1 to 3.

5. The molded product according to claim 4, wherein said molded product is a film.
